(19) **Europäisches Patentamt**

**European Patent Office**

**Office européen des brevets**

(11) **EP 1 051 371 B1**

(12) **EUROPÄISCHE PATENTSCHRIFT**

(45) Veröffentlichungstag und Bekanntmachung des Hinweises auf die Patenterteilung:
**01.09.2004  Patentblatt 2004/36**

(51) Int Cl.[7]: **C04B 37/00**, C04B 35/58, C04B 35/593, F23Q 7/00, H05B 3/14

(21) Anmeldenummer: **99960892.0**

(22) Anmeldetag: **11.11.1999**

(86) Internationale Anmeldenummer:
**PCT/DE1999/003589**

(87) Internationale Veröffentlichungsnummer:
**WO 2000/034205 (15.06.2000 Gazette 2000/24)**

(54) **GESINTERTER STIFTHEIZER**

SINTERED STICK-SHAPED HEATER

CORPS DE CHAUFFE FRITTE EN FORME DE BATON

(84) Benannte Vertragsstaaten:
**CH DE ES FR GB IT LI**

(30) Priorität: **04.12.1998  DE 19860919**

(43) Veröffentlichungstag der Anmeldung:
**15.11.2000  Patentblatt 2000/46**

(73) Patentinhaber: **ROBERT BOSCH GMBH**
**70442 Stuttgart (DE)**

(72) Erfinder:
 • **LINDEMANN, Gert**
   **D-72805 Lichtenstein (DE)**
 • **LINDNER, Friederike**
   **D-70839 Gerlingen (DE)**

(56) Entgegenhaltungen:
 EP-A- 0 601 727    DE-A- 3 512 483
 DE-A- 3 519 437    DE-A- 3 734 274
 DE-A- 19 722 321

EP 1 051 371 B1

**Beschreibung**

Die Erfindung betrifft einen gesinterten Stiftheizer aus einem keramischen Verbundgefüge, der eine im wesentlichen innenliegende Isolationsschicht und eine außenliegende Leitschicht aufweist.

Stand der Technik

In der DE 35 12 483 wird ein keramisches Heizelement aus $Si_3N_4$/$MoSi_2$-Kompositen mit einem Anteil von 35-75 Mol.-% $Si_3N_4$ beschrieben, wobei der mittlere Teilchendurchmesser des eingesetzten $Si_3N_4$-Pulvers mindestens doppelt so groß ist, wie der des eingesetzten $MoSi_2$-Pulvers. Der mittlere Teilchendurchmesser des $MoSi_2$-Pulvers ist 2 μm oder kleiner.

Die Nutzung dieser Pulverkombination führt jedoch nur dann zu befriedigenden Festigkeiten, wenn ein axiales Heißpressen oder ein heiß isostatischer Preßprozeß zur Anwendung kommt. Nachteilig an diesem Verfahren ist aber, daß nachfolgend eine aufwendige Hartbearbeitung erfolgen muß.

In der DE 35 19 437 wird eine elektrische keramische Heizvorrichtung ebenfalls unter Verwendung von $Si_3N_4$/$MoSi_2$-Pulvern beschrieben, wobei der elektrisch isolierende Teil aus Pulvern hergestellt wird, deren mittlerer Teilchendurchmesser 1-50 μm beträgt. Das leitfähige Pulver hat denselben oder einen größeren mittleren Teilchendurchmesser als das isolierende Pulver. Der leitfähige Teil der Heizvorrichtung ist derart gestaltet, daß das elektrisch leitfähige Pulver nicht größer als die Hälfte der durchschnittlichen Größe des elektrisch isolierenden Pulvers ist. Wie in der DE 35 12 483 führt auch hier diese Pulverkombination nur dann zu Produkten mit einer hinreichenden Festigkeit, wenn ein axiales Heißpressen oder ein heißisostatischer Prozeß zur Anwendung kommt mit den oben genannten Nachteilen.

In der DE 37 34 274 C2 werden keramische Verbundwerkstoffe auf der Basis von Siliziumnitrid, Aluminiumnitrid und β-Sialon in Verbindung mit Sekundärphasen aus verschiedenen Siliziden, Carbiden, Boriden und Nitriden von Übergangsmetallelementen beschrieben. Je nach Sekundärphasengehalt besitzen diese Materialien gezielt einstellbare elektrische Eigenschaften. Die einstellbaren spezifischen Werte für den elektrischen Widerstand dieser Materialien liegen bei Raumtemperatur zwischen $1\cdot10^{13}$ bis $1\cdot10^{-4}$ Ω cm und zeigen eine positive Abhängigkeit von der Temperatur (PTC-Effekt). Das Festigkeitsniveau dieser so erzeugten Verbundwerkstoffe liegt nicht unter 200 MPa. Das dort verwendete Verfahren zur Herstellung von hochwarmfesten Verbundwerkstoffen ist als einaxiales Heißpressen anzusehen, das insbesondere Nachteile hinsichtlich der Formgebung von aus diesen Verbundwerkstoffen hergestellten Körpern aufweist, wie oben erwähnt. Weitere Nachteile liegen darin, daß damit hergestellte Körper anisotrope Materialeigenschaften aufgrund der Preßrichtung besitzen können und nur als Chargierverfahren, d. h. nicht als kontinuierliches Verfahren, anwendbar ist. Darüberhinaus erfordert dieses Verfahren hohe Temperaturen und Drücke.

In der DE 37 34 274 C2 wird auch die Realisierung eines keramischen Heizers bzw. einer Glühstiftkerze unter Verwendung von $Si_3N_4$/$MoSi_2$-Kompositen mit eingesinterten Metalldrähten als Zuleitungen beschrieben.

Aufgabe und Vorteile der Erfindung

Die Aufgabe vorliegender Erfindung bestand darin, einen Stiftheizer mit hoher Festigkeit bereitzustellen, bei dessen Herstellung eine aufwendige Hartbearbeitung entfallen kann.

Die Aufgabe der Erfindung wird durch einen gesinterten Stiftheizer aus einem keramischen Verbundgefüge gelöst, der eine im wesentlichen innenliegende Isolationsschicht und eine außenliegende Leitschicht aufweist, wobei die Isolationsschicht aus 51-57 Ma.-% $Si_3N_4$ mit $d_{50}$ von bevorzugt weniger als 0,7 μm, 37-42 Ma.-% $MoSi_2$ mit $d_{50}$ von bevorzugt 2-5 μm, 2,4-2,8 Ma.-% $Al_2O_3$ mit $d_{50}$ von bevorzugt 0,2-0,3 μm und 3,2-3,6 Ma.-% $Y_2O_3$ mit $d_{50}$ von bevorzugt 0,5-1,0 μm und die Leitschicht aus 38-42 Ma.-% $Si_3N_4$ mit $d_{50}$ von bevorzugt weniger als 0,7 μm, 53-58 Ma.-% $MoSi_2$ mit $d_{50}$ von bevorzugt 2-5 μm, 1,8-2,0 Ma.-% $Al_2O_3$ mit $d_{50}$ von bevorzugt 0,2-0,3 μm und 2,4-2,7 Ma.-% $Y_2O_3$ mit $d_{50}$ von bevorzugt 0,5-1,0 μm erhältlich ist.

Das elektrisch isolierende Material, das die Isolationsschicht bildet, weist einen spezifischen elektrischen Widerstand von $10^5$-$10^6$ Ω cm auf. Das elektrisch leitfähige Material, das die Leitschicht bildet, weist einen spezifischen elektrischen Widerstand von $1\cdot10^{-3}$ - $5\cdot10^{-3}$ Ω cm auf.

Wie allgemein bekannt, werden die elektrischen Eigenschaften neben der konkreten chemischen Zusammensetzung der Kompositmaterialien durch die spezifischen Korngrößenverhältnisse der verwendeten Pulver bestimmt. Durch die erfindungsgemäße spezifische Auswahl, sowohl hinsichtlich der eingesetzten Materialien, deren Mengenverhältnissen und insbesondere durch deren mittleren Teilchendurchmesser ist es nunmehr möglich, elektrisch isolierende und elektrisch leitfähige Komposite herzustellen, die nach der Sinterung eine 4-Punkt-Biegefestigkeit von mindestens 500 MPa bei Raumtemperatur aufweisen und die bis zu einer Temperatur von 1000°C nahezu unverändert bleibt.

Insbesondere die Nutzung des sehr feinen, hochsinteraktiven $Si_3N_4$-Rohstoffs mit einem mittleren Teilchendurchmesser von unter 0,7 μm und des $MoSi_2$-Rohstoffs mit einem mittleren Teilchendurchmesser von 2-5 μm sowohl für die Herstellung des elektrisch isolierenden Materials als auch für die des elektrisch leitfähigen Materials führen zu diesen besonders vorteilhaften Eigenschaften des gesinterten Stiftheizers.

Unter Anwendung des in der DE 197 22 321.4 beschriebenen Verfahrens lassen sich Kombinationen aus diesen Materialien aufbereiten, formgeben und gasdrucksintern. Der Sinterprozeß besteht aus mindestens zwei Stufen, wobei die erste Sinterung unter Inertgas und die letzte Sinterung unter einem Stickstoffpartialdruck von 2-10·$10^5$ Pa durchgeführt und wobei die Temperatur der ersten Sinterstufe geringer als die der letzten Sinterstufe ist. Hierbei ist in der ersten Sinterstufe ein Druck von Atmosphärendruck und eine maximale Temperatur von 900°C bevorzugt. In der letzten Sinterstufe ist eine Sintertemperatur zwischen 1700 und 1900°C bevorzugt.

Des weiteren kann die letzte Sinterstufe bei variabler Temperatur und/oder variablem Stickstoffpartialdruck durchgeführt werden, derart, daß im Zustandsdiagramm das keramische Verbundgefüge die reinen Phasen des isolierenden Bestandteils und des leitenden Bestandteils umfaßt.

Des weiteren kann die Sinterung in einem Bereich des Stickstoffpartialdrucks mit einer oberen Grenze $Y_1 = \log p (N_2)$ und einer unteren Grenze $Y_2 = \log p (N_2)$ erfolgen, bei dem sich die obere Grenze $Y_1$ und die untere Grenze $Y_2$ nach folgenden Funktionen ergeben:

$$Y_1 = 7,1566 \ln (T) - 52,719$$

und

$$Y_2 = 9,8279 \ln (T) - 73,988,$$

wobei T die Sintertemperatur mit ≤ 1900°C ist und in °C eingesetzt wird. Die Angabe des Stickstoffpartialdrukkes $p (N_2)$ erfolgt dabei in bar.

Zur Herstellung der leitenden Kompositkomponente finden Pulver Verwendung, die die gleichen morphologischen Eigenschaften wie die Pulver aufweisen, die zur Herstellung der nichtleitenden Kompositkomponente eingesetzt werden.

Die beiden Kompositkomponenten werden durch mischende Mahlung vorkonditioniert. Anschließend werden spritzgießfähige Polymercompounds aus den jeweiligen Kompositkomponenten, aus einem speziellen Polypropylen und Cyclododecan hergestellt, unter Schutzgas bei hoher Temperatur geknetet und durch Abkühlen bei laufendem Kneten granuliert. Durch Spritzguß (CIM = ceramic injection molding), vorzugsweise durch Zweikomponentenspritzguß, wird ein Keramikkörper aus der Polymercompoundmasse, die die Leitschicht bilden wird, ausgeformt, und in einem zweiten Takt die andere Polymercompoundmasse nachgespritzt.

In einem ersten Temperungsschritt erfolgt das Entfernen des organischen Binders (Entbinderung) und eine Vorsinterung bis 900°C unter $10^5$ Pa Stickstoff. Die Hauptsinterung erfolgt unter einem definierten $N_2$-Partialdruck, wobei dieser mit der Temperatur so variiert wird, daß der Partialdruck innerhalb des in Anspruch 6 genannten Bereiches liegt. Als Inertgas kann beispielsweise Argon verwendet werden. Durch Zumischen des Inertgases kann der Gesamtsinterdruck auf Werte bis $10^7$ Pa erhöht werden.

Die eingesetzten sehr feinen Pulver bewirken im späteren Sinterkörper ein sehr homogenes, fein verzahntes $Si_3N_4$-Matrix-Sintergefüge mit feiner Verteilung des $MoSi_2$ in $Si_3N_4$. Darüber hinaus führen die erfindungsgemäß eingesetzten Pulver überraschend zu den sehr hohen 4-Punkt-Biegefestigkeiten.

Der Stiftheizer kann als keramische Glühstiftkerze verwendet werden.

Zeichnung

Figur 1 zeigt die Teilchengrößenverteilung eines erfindungsgemäß einsetzbaren $Si_3N_4$-Pulvers. Die Korngrößenverteilung ist hierbei sehr eng, mit einem mittleren Korndurchmesser von 0,58 µm und einer BET-Oberfläche von 11 $m^2$/g.

Figur 2 zeigt die Teilchengrößenverteilung eines erfindungsgemäß einsetzbaren $MoSi_2$-Pulvers. Der mittlere Korndurchmesser beträgt 4,55 µm und die BET-Oberfläche 1,1$m^2$/g.

Figur 3 zeigt ein keramisches Heizelement in Form eines gesinterten Stiftheizers in schräger Seitenansicht. Der Stiftheizer weist eine äußere aus der leitfähigen Komponente bestehende Leitschicht 2 und eine im wesentlichen innenliegende aus der isolierenden Komponente bestehende Isolationsschicht 1 auf.

Beschreibung der Ausführungsbeispiele

Beispiel 1

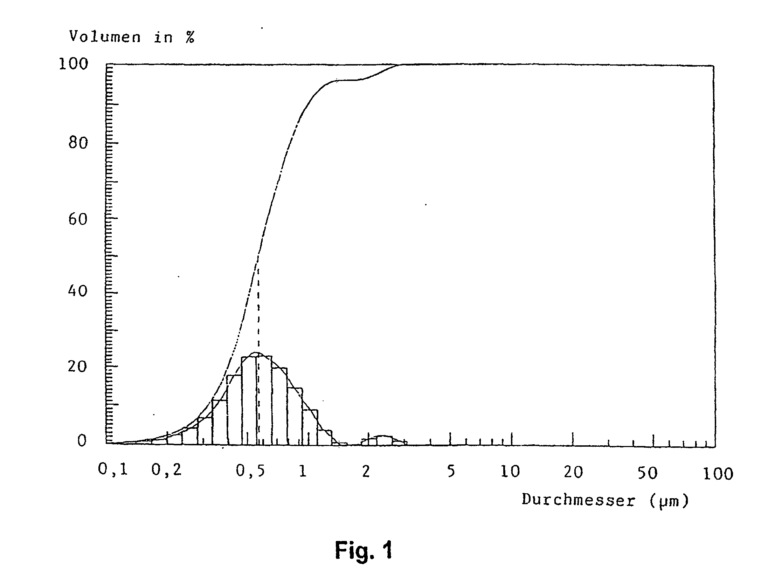

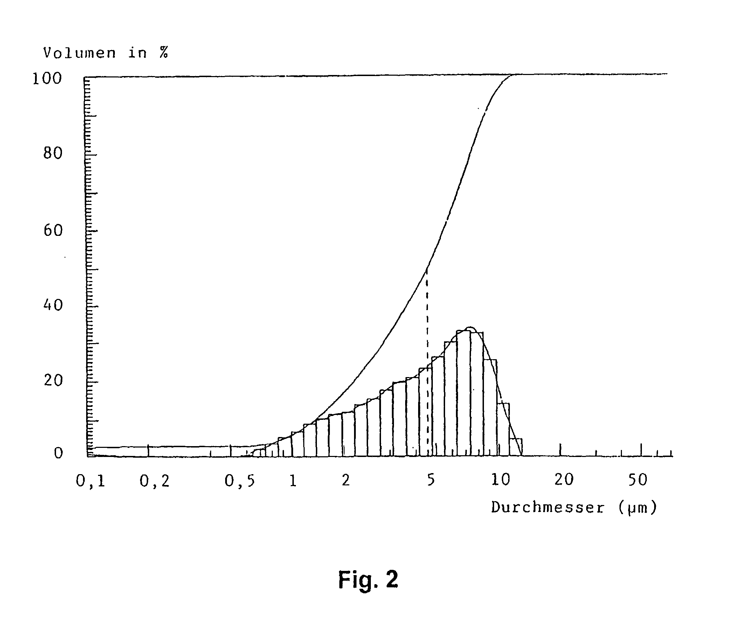

Es wurde die Herstellung der isolierenden Kompositkomponente durch Vermischen von 54 Ma.-% $Si_3N_4$, 2,58 Ma.-% $Al_2O_3$, 3,42 Ma.-% $Y_2O_3$ und 40 Ma.-% $MoSi_2$ vorbereitet. Das hierbei eingesetzte Siliziumnitrid hatte die in Figur 1 dargestellte Korngrößenverteilung und das eingesetzte Molybdänsilizidpulver die in Figur 2 dargestellte Korngrößenverteilung. Die Herstellung der leitenden Kompositkomponente wurde durch Vermischen von 40,5 Ma.-% $Si_3N_4$, 55 Ma.-% $MoSi_2$, 1,94 Ma.-% $Al_2O_3$ und 2,56 Ma.-% $Y_2O_3$ vorbereitet. Die morphologischen Eigenschaften der beiden Kompositkomponenten waren gleich.

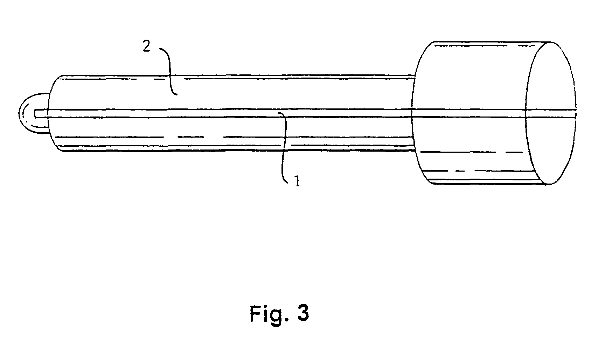

Aus den beiden Kompositkomponenten wurden jeweils spritzgießfähige Polymercompounds hergestellt, wobei das das nach der Sinterung isolierende Material aufweisende Polymercompound 12 Ma.-% und das das nach der Sinterung leitfähige Material enthaltende Polymercompound 12,5 Ma.-% Polybond® 1001 enthielt. Polybond® 1001 ist ein Homopolypropylen, das mit 6% Acrylsäure gepfropft ist (Hersteller: Uniroyal Chemical). Die Polymercompounds enthielten ferner 6 Ma.-% Cyclododecan. Die Bestandteile wurden unter Schutzgas bei 180°C geknetet. Anschließend.wurde bei laufendem Kneter durch Abkühlen granuliert. Durch Zweikomponentenspritzguß wurde der in Figur 3 gezeigte Stiftheizer geformt. Anschließend wurde der spritzgegossene Gegenstand in der oben beschriebenen Weise durch ein Gasdrucksinterverfahren verdichtet.

Die Leitfähigkeit der außenliegenden Leitschicht 2 aus dem $Si_3N_4/MoSi_2$-Komposit betrug $2,2 \cdot 10^{-3}$ $\Omega$ cm, die der im wesentlichen innenliegenden Isolationsschicht 1, die ebenfalls aus einem $Si_3N_4/MoSi_2$-Komposit besteht, $1 \cdot 10^6$ $\Omega$ cm.

Beispiel 2

Es wurde die Herstellung der isolierenden Kompositkomponente durch Vermischen von 57 Ma.-% $Si_3N_4$, 2,6 Ma.-% $Al_2O_3$, 3,5 Ma.-% $Y_2O_3$ und 37 Ma.-% $MoSi_2$ vorbereitet. Das hierbei eingesetzte Siliziumnitrid und das Molybdänsilizidpulver waren mit denen aus Beispiel 1 identisch. Die Herstellung der leitenden Kompositkomponente wurde durch Vermischen von 38 Ma.-% $Si_3N_4$, 57,8 Ma.-% $MoSi_2$, 1,8 Ma.-% $Al_2O_3$ und 2,4 Ma.-% $Y_2O_3$ vorbereitet. Die durch mischende Mahlung vorkonditionierten jeweiligen Kompositkomponenten wurden zur Herstellung preßfähiger Pulver mit geeigneten Preßhilfsmitteln, wie Polyvinylalkohol, granuliert. Die Herstellung der in Figur 3 gezeigten Stiftheizer erfolgte durch Verbundpressen mit nachfolgender Grünbearbeitung. Die Verdichtung erfolgte analog Beispiel 1.

Die 4-Punkt-Biegefestigkeit bei Raumtemperatur betrug für die isolierende Komponente 640 MPa $\pm$ 20 MPa, für die leitende Komponente 600 MPa $\pm$ 25 MPa.

**Patentansprüche**

1. Gesinterter Stiftheizer aus einem keramischen Verbundgefüge, der eine im wesentlichen innenliegende Isolationsschicht (1) und eine außenliegende Leitschicht (2) aufweist, wobei die Isolationsschicht (1) aus

    51-57 Ma.-% $Si_3N_4$,
    37-42 Ma.-% $MoSi_2$,
    2,4-2,8 Ma.-% $Al_2O_3$ und
    3,2-3,6 Ma.-% $Y_2O_3$
und die Leitschicht (2) aus
    38-42 Ma.-% $Si_3N_4$,
    53-58 Ma.-% $MoSi_2$,
    1,8-2,0 Ma.-% $Al_2O_3$ und
    2,4-2,7 Ma.-% $Y_2O_3$

erhältlich ist.

2. Stiftheizer nach Anspruch 1, **dadurch gekennzeichnet, daß** die Isolationsschicht (1) aus
    51-57 Ma.-% $Si_3N_4$ mit $d_{50}$ von weniger als 0,7μm,
    37-42 Ma.-% $MoSi_2$ mit $d_{50}$ von 2-5μm,
    2,4-2,8 Ma.-% $Al_2O_3$ mit $d_{50}$ von 0,2-0,3μm und
    3,2-3,6 Ma.-% $Y_2O_3$ mit $d_{50}$ von 0,5-1,0μm
und die Leitschicht (2) aus
    38-42 Ma.-% $Si_3N_4$ mit $d_{50}$ von weniger als 0,7μm,
    53-58 Ma.-% $MoSi_2$ mit $d_{50}$ von 2-5μm,
    1,8-2,0 Ma.-% $Al_2O_3$ mit $d_{50}$ von 0,2-0,3μm und
    2,4-2,7 Ma.-% $Y_2O_3$ mit $d_{50}$ von 0,5-1,0μm
erhältlich ist.

3. Verfahren zur Herstellung eines Stiftheizers nach Anspruch 1 oder 2, unter Anwendung eines Sinterprozesses, **dadurch gekennzeichnet, daß** der Sinterprozeß aus mindestens zwei Stufen besteht, wobei die erste Sinterung unter Inertgas und die letzte Sinterung unter einem Stickstoffpartialdruck von $2\text{-}10 \cdot 10^5$ Pa durchgeführt und wobei die Temperatur der ersten Sinterstufe geringer als die der letzten Sinterstufe ist.

4. Verfahren nach Anspruch 3, **dadurch gekennzeichnet, daß** die erste Sinterstufe bei Atmosphärendruck und bei maximal 900°C durchgeführt wird.

5. Verfahren nach Anspruch 3 oder 4, **dadurch gekennzeichnet, daß** die Sintertemperatur der letzten Sinterstufe zwischen 1700 und 1900°C beträgt.

6. Verfahren nach Anspruch 3 oder 4, **dadurch gekennzeichnet, daß** die letzte Sinterstufe bei variabler Temperatur und/oder variablem Stickstoffpartialdruck durchgeführt wird, derart, daß im Zustandsdiagramm das keramische Verbundgefüge die reinen Phasen des isolierenden Bestandteils und des leitenden Bestandteils umfaßt.

7. Verfahren nach Anspruch 6, **dadurch gekennzeichnet, daß** die Sinterung in einem Bereich des Stickstoffpartialdrucks mit einer oberen Grenze $Y_1$ und einer unteren Grenze $Y_2$ erfolgt, bei dem sich die obere Grenze $Y_1$ und die untere Grenze $Y_2$ nach folgenden Funktionen ergeben:

$$Y_1 = \log p\,(N_2) = 7{,}1566 \ln(T) - 52{,}719$$

und

$$Y_2 = \log p\,(N_2) = 9{,}8279 \ln(T) - 73{,}988,$$

wobei T die Sintertemperatur mit $\leq 1900°C$ in $°C$ ist, und $p(N_2)$ in bar einzusetzen ist.

## Claims

1. Sintered glow plug heater made from a ceramic composite structure, which has a substantially internal insulation layer (1) and an external conductive, layer (2), the insulation layer (1) being obtainable from
   51-57% by mass of $Si_3N_4$,
   37-42% by mass of $MoSi_2$,
   2.4-2.8% by mass of $Al_2O_3$ and
   3.2-3.6% by mass of $Y_2O_3$
   and the conductive layer (2) being obtainable from
   38-42% by mass of $Si_3N_4$,
   53-58% by mass of $MoSi_2$,
   1,8-2.0% by mass of $Al_2O_3$ and
   2.4-2.7% by mass of $Y_2O_3$.

2. Glow plug heater according to Claim 1, **characterized in that** the insulation layer (1) is obtainable from
   51-57% by mass of $Si_3N_4$ with $d_{50}$ of less than 0.7 µm,
   37-42% by mass of $MoSi_2$ with $d_{50}$ of 2-5 µm,
   2.4-2.8% by mass of $Al_2O_3$ with $d_{50}$ of 0.2-0.3 µm, and
   3.2-3.6% by mass of $Y_2O_3$ with $d_{50}$ of 0.5-1.0 µm,
   and the conductive layer (2) being obtainable from
   38-42% by mass of $Si_3N_4$ with $d_{50}$ of less than 0.7 µm,
   53-58% by mass of $MoSi_2$ with $d_{50}$ of 2-5 µm,
   1.8-2.0% by mass of $Al_2O_3$ with $d_{50}$ of 0.2-0.3 µm, and
   2.4-2.7% by mass of $Y_2O_3$ with $d_{50}$ of 0.5-1.0 µm.

3. Process for producing a glow plug heater according to Claim 1 or 2, using a sintering process, **characterized in that** the sintering process comprises at least two stages, the first sintering being carried out under inert gas and the final sintering being carried out under a nitrogen partial pressure of $2\text{-}10 \cdot 10^5$ Pa, and the temperature of the first sintering stage being lower than that of the final sintering stage.

4. Process according to Claim 3, **characterized in that** the first sintering stage is carried out at atmospheric pressure and at a maximum temperature of 900°C.

5. Process according to Claim 3 or 4, **characterized in that** the sintering temperature of the final sintering stage is between 1700 and 1900°C.

6. Process according to Claim 3 or 4, **characterized in that** the final sintering stage is carried out at a variable temperature and/or variable nitrogen partial pressure, in such a manner that in the phase diagram the ceramic composite structure includes the pure phases of the insulating constituent and of the conductive constituent.

7. Process according to Claim 6, **characterized in that** the sintering takes place in a nitrogen partial pressure range with an upper limit $Y_1$ and a lower limit $Y_2$, with the upper limit $Y_1$ and the lower limit $Y_2$ resulting from the following functions:

   $$Y_1 - \log p\,(N_2) = 7.1566 \ln(T) - 52.719$$

   and

   $$Y_2 = \log p\,(N_2) = 9.8279 \ln(T) - 73.988,$$

   where T is the sintering temperature of $\leq 1900°C$ in $°C$, and $p(N_2)$ is to be inserted in bar.

## Revendications

1. Corps de chauffe fritté en forme de bâton constitué d'une structure composite céramique, qui présente une couche isolante (1) pour l'essentiel disposée à l'intérieur et une couche conductrice (2) disposée à l'extérieur, la couche isolante (1) pouvant être obtenue à partir de
   51-57 % en masse de $Si_3N_4$,
   37-42 % en masse de $MoSi_2$,
   2,4-2,8 % en masse de $Al_2O_3$ et
   3,2-3,6 % en masse de $Y_2O_3$
   et la couche conductrice (2) à partir de
   38-42 % en masse de $Si_3N_4$,
   53-58 % en masse de $MoSi_2$,
   1,8-2,0 % en masse de $Al_2O_3$ et
   2,4-2,7 % en masse de $Y_2O_3$.

2. Corps chauffant en forme de bâton selon la revendication 1,
   **caractérisé en ce que**
   la couche isolante (1) peut être obtenue à partir de
   51-57 % en masse de $Si_3N_4$ avec dso inférieur à 0,7 µm,
   37-42 % en masse de $MoSi_2$ avec $d_{50}$ égal à 2-5 µm,
   2,4-2,8 % en masse de $Al_2O_3$ avec $d_{50}$ égal à 0,2-0,3 µm et
   3,2-3,6 % en masse de $Y_2O_3$ avec $d_{50}$ égal à 0,5-1,0 µm
   et la couche conductrice (2) à partir de
   38-42 % en masse de $Si_3N_4$ avec $d_{50}$ inférieur à 0,7 µm,

53-58 % en masse de $MoSi_2$ avec $d_{50}$ égal à 2-5 μm, 1,8-2,0 % en masse de $Al_2O_3$ avec $d_{50}$ égal à 0,2-0,3 μm et 2,4-2,7 % en masse de $Y_2O_3$ avec $d_{50}$ égal à 0,5-1,0 μm.

**3.** Procédé de fabrication d'un corps chauffant en forme de bâton selon la revendication 1 ou 2, à l'aide d'un processus de frittage,
**caractérisé en ce que**
le processus de frittage se compose d'au moins deux étapes, le premier frittage étant effectué en présence de gaz inerte et le dernier frittage sous une pression partielle d'azote de $2\text{-}10\cdot10^5$ Pa, et la température de la première étape de frittage étant inférieure à celle de la dernière étape de frittage.

**4.** Procédé selon la revendication 3,
**caractérisé en ce que**
la première étape de frittage est effectuée sous une pression atmosphérique et à 900 °C maximum.

**5.** Procédé selon la revendication 3 ou 4,
**caractérisé en ce que**
la température de frittage de la dernière étape de frittage est comprise entre 1 700 et 1 900 °C.

**6.** Procédé selon la revendication 3 ou 4,
**caractérisé en ce que**
la dernière étape de frittage est effectuée à température variable et/ou sous pression partielle d'azote variable, de telle sorte que dans le diagramme d'état, la structure composite céramique comprend uniquement les phases du composant isolant et du composant conducteur.

**7.** Procédé selon la revendication 6,
**caractérisé en ce que**
le frittage s'effectue dans une plage de pression partielle d'azote ayant une limite supérieure $Y_1$ et une limite inférieure $Y_2$, où l'on obtient la limite supérieure $Y_1$ et la limite inférieure $Y_2$ selon les fonctions suivantes :

$$Y_1 = \log p\,(N_2) = 7{,}1566\,\ln(T) - 52{,}719$$

et

$$Y_2 = \log p\,(N_2) = 9{,}8279\,\ln(T) - 73{,}988,$$

où T est la température de frittage en °C et $T \leq 1\ 900$ °C, et où $p(N_2)$ est donné et bars.

Fig. 1

EP 1 051 371 B1

Fig. 2

Fig. 3